# FASCICULE DE BREVET EUROPEEN

(11) **EP 1 169 945 B1**
(45) Date de publication et mention de la délivrance du brevet: **23.03.2005**
(21) Numéro de dépôt: 01870131.8
(22) Date de dépôt: 20.06.2001
(51) Int. Cl.: A47B 91/02

(54) **Cale de soutènement réglable.**
Einstellbarer Stutzkeil
Adjustable support wedge

(30) Priorité: 04.07.2000 BE 200000429
(43) Date de publication de la demande: 09.01.2002
(73) Titulaire: D'Haeyere, Alain, 1470 Bousval (BE)
(72) Inventeur: D'Haeyere, Alain, 1470 Bousval (BE)
(74) Mandataire: Vandeberg, Marie-Paule L.G.

(56) Documents cités:
- DE-C- 95 282
- DE-U- 8 700 859
- US-A- 4 798 359

## Description

L'invention concerne les cales de soutènement destinées à compenser les inégalités du sol ou des fondations lors de l'érection de structures, particulièrement des structures temporaires.

Les cales de l'invention trouvent leur application notamment dans le secteur des stands d'exposition, tribunes provisoires ou non, pose de revêtement et de cloisonnement, etc.

Les problèmes posés par des irrégularités du sol se posent particulièrement quand on fait usage de structures préfabriquées, dont les mensurations strictes supposent un cadre "de référence" où les sols sont plans et/ou à niveau.

Les hommes de l'art résolvent généralement ces problèmes par l'usage de dispositifs ajustables à pas de vis, tels que des pièces réglables ou des vérins ou par l'interposition de cales et de coins de fortune en matériaux divers.

Un dispositif permettant d'ajuster la longueur des pieds d'une table est décrit dans US 3,043,641.

Les dispositifs à pas de vis ont l'inconvénient de présenter une important extension axiale; de surcroît, ces pièces sont coûteuses, sensibles au grippage et à l'oxydation. Leur résistance à la compression est limitée, et elles sont sujettes au flambage. Enfin, il est généralement nécessaire que tous les supports de la structure à ériger en soient munis indistinctement, ce qui accroît le coût des montages.

US 3,030,730 décrit une cale ajustable pour pied de table, formée de deux coins crantés.

Les cales d'épaisseur et les coins posent quant à eux un problème de stabilité : outre le fait qu'ils sont rarement réalisés dans un matériau de premier choix, il est fréquent qu'ils se déplacent et faussent l'aplomb des structures qu'ils soutiennent.

US 4 798 359 décrit un pied de table qui comprend une double rampe hélicoïdale, utilisé ici dans un but radicalement différent: la pente des rampes est calculée délibérément pour que les deux pièces glissent l'une sur l'autre.

Le but de l'invention est de mettre à la disposition des entreprises travaillant dans le domaine de l'érection de structures durables ou temporaires un dispositif de compensation des inégalités du sol de faible encombrement axial, stable, bon marché et fiable.

L'objet de l'invention est une cale de soutènement à épaisseur réglable composée de deux pièces semblables, en substance tronc-cylindrique, une des bases du tronc du cylindre portant au moins deux rampes hélicoïdales à pas régulier, symétriques par rapport à l'axe du cylindre et s'étendant sur un secteur angulaire proportionné de la base, ces rampes étant raccordées les unes aux autres par des plans passant par l'axe du cylindre, le pas des rampes hélicoïdales et leur coefficient de friction relatif étant tels qu'on peut faire varier à volonté, par pivotement, la hauteur de la cale et qu'après positionnement, ils empêchent toute rotation relative des deux rampes en contact.

Suivant un mode de réalisation préféré, la cale est composée de deux rampes s'étendant chacune sur un secteur de 180° de la base.

La cale de soutènement comprend avantageusement un orifice axial cylindrique, éventuellement garni d'un manchon intérieur.

Ses pièces sont réalisées en un matériau présentant une bonne résistance à la compression, de préférence choisi parmi [les bétons, les bétons de polymère, les métaux tels que la fonte, les matériaux synthétiques, les céramiques].

les rampes peuvent porter des cannelures radiales empêchant, après positionnement, toute rotation relative de deux rampes en contact.

Un avantage de l'invention est que les cales sont facilement recyclables, pratiquement indestructibles et largement réutilisables.

En fonction des charges à soutenir et de la nature des structures, les cales peuvent être réalisées en une grande variété de dimensions, pour des charges nominales typiquement de l'ordre de la tonne, mais se situant plus généralement entre 0,1 et plusieurs tonnes.

Les cales permettent une économie substantielle sur la fabrication des structures avec moins d'accessoires de compensation, celles-ci pouvant répondre à des normes dimensionnelles plus strictes.

D'autres particularités et avantages de l'invention ressortent de la description ci-après d'une forme de réalisation particulière, référence étant faite aux dessins annexés, dans lesquels
la fig. 1 est une vue en perspective d'une des deux pièces semblables formant une cale à deux rampes ;
la fig. 2 est une vue en perspective en coupe avec fantôme d'une pièce comme à la figure 1 ;
les fig. 3 et 4 sont des vues en perspective d'une cale à deux rampes, réglée à deux épaisseurs différentes.
La fig. 5 est une vue en perspective d'une cale à trois rampes.

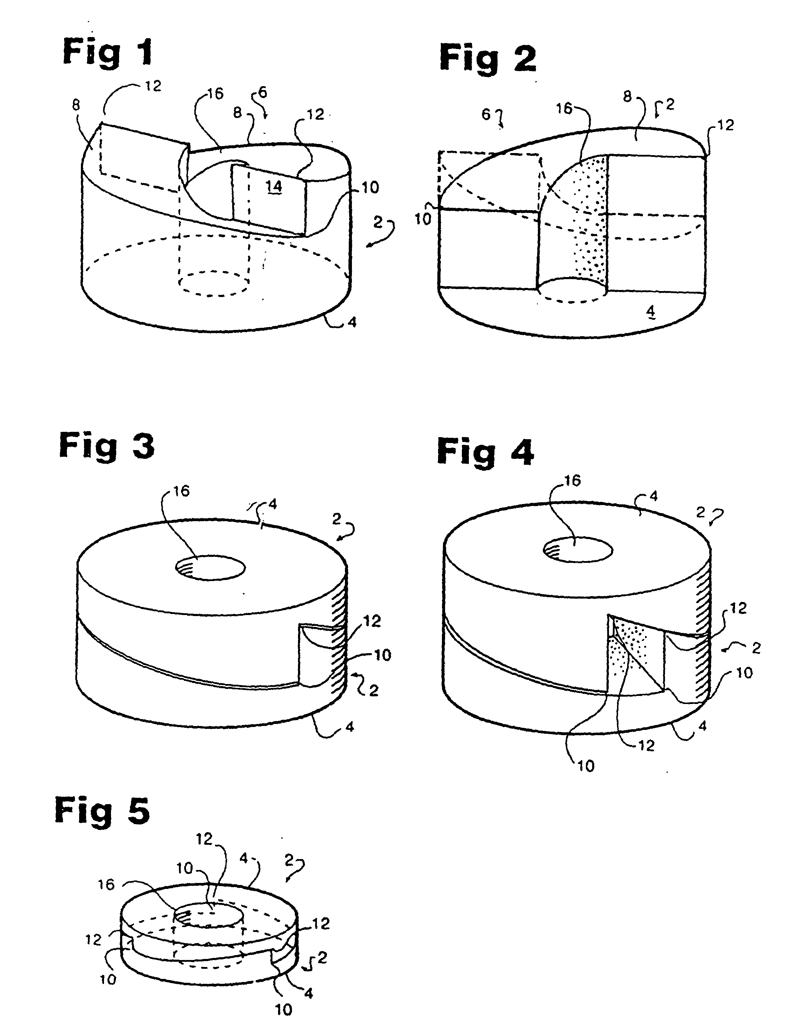

La fig. 1 montre, en perspective, une des deux pièces formant la cale de l'invention.

Cette pièce 2 est, en substance, cylindrique.

Une des bases 4 du cylindre est plane et forme un angle de 90° avec l'axe du cylindre.

L'autre base 6 du cylindre porte deux rampes hélicoïdales 8, chacune de ces rampes s'étendant sur un secteur de 180°.

L'inclinaison des rampes 8 est constante de leur point bas 10 à leur point haut 12. Les deux rampes sont raccordées par un plan 14 passant par l'axe du cylindre.

En superposant deux pièces 2 de façon à ce que leurs plans portant les rampes 8 viennent en contact l'une de l'autre, comme montré aux fig. 3 et 4, on peut faire varier à volonté, par pivotement, la hauteur de la cale d'une valeur minimum (lorsque les deux pièces 2 sont totalement imbriquées l'une dans l'autre, v. fig.3) à une valeur théorique maximum (lorsque les points hauts 12 des rampes sont opposés). En pratique, on ne dépassera jamais une rotation relative de près des deux tiers de la longueur des rampes, soit de 120° pour une cale à deux rampes, 80° pour une cale à trois rampes, etc.

Le cylindre est traversé en son centre, de part en part, par un orifice 16 cylindrique, dans lequel peuvent être insérés des pièces ou des montants de la structure (non représentés) soutenue par la cale. On peut aussi y glisser un manchon intérieur assurant la liaison et le centrage relatif des deux pièces 2.

L'orifice 16 peut également servir à l'injection d'un matériau (mortier) solidarisant définitivement les deux pièces, en cas d'utilisation permanente ou de longue durée.

On notera que les proportions (diamètre/épaisseur) ont été exagérées à dessein dans les figures jointes.

Pour donner un exemple de réalisation plus concret, une cale en béton destinée à une charge d'environ 1 à 2 tonnes peut présenter les dimensions suivantes : diamètre 40 cm, hauteur au point bas (10) : 4.5 cm, hauteur au point haut (12) : 10 cm ; la latitude de réglage va de 9 cm à 12.5 cm.

Si les irrégularités du sol dépassent la latitude ci-dessus, ont aura recours à la pose d'une double cale, ou éventuellement à une cale à base plus épaisse.

## Revendications

1. Cale de soutènement à épaisseur réglable composée de deux pièces (2) semblables, en substance tronc-cylindrique, dans laquelle une des bases (6) du tronc du cylindre porte au moins deux rampes hélicoïdales (8) à pas régulier, symétriques par rapport à l'axe du cylindre et s'étendant sur un secteur angulaire proportionné de la base (6), ces rampes (8) étant raccordées les unes aux autres par des plans (14) passant par l'axe du cylindre, **caractérisée en ce que** le pas des rampes hélicoïdales (8) et leur coefficient de friction relatif sont tels qu'on peut faire varier à volonté, par pivotement, la hauteur de la cale et qu'après positionnement, ils empêchent toute rotation relative des deux rampes en contact.

2. Cale de soutènement suivant la revendication 1 **caractérisée en ce qu'**elle est composée de 2 rampes (8) s'étendant chacune sur un secteur de 180°.

3. Cale de soutènement suivant l'une quelconque des revendications 1 et 2 **caractérisée en ce qu'**elle comprend un orifice axial cylindrique (16).

4. Cale de soutènement suivant l'une quelconque des revendications précédentes, **caractérisée en ce que** ses pièces (2) sont réalisées en un matériau choisi parmi les bétons, les bétons de polymère, la fonte, les matériaux plastiques rigides.

5. Cale de soutènement suivant l'une quelconque des revendications précédentes **caractérisée en ce que** les rampes portent des cannelures radiales empêchant, après positionnement, toute rotation relative des deux rampes en contact.

## Patentansprüche

1. Stützkeil mit verstellbarer Stärke, bestehend aus zwei ähnlichen Teilen (2), die im Wesentlichen zylinderstumpfförmig sind, bei welchem eine der Basen (6) des Stumpfs des Zylinders mindestens zwei Schraubenrampen (8) mit regelmäßigem Gang umfasst, die zu der Achse des Zylinders symmetrisch sind und sich über einen proportionierten Winkelabschnitt der Basis (6) erstrecken, wobei diese Rampen (8) miteinander durch Ebenen (14) verbunden sind, die durch die Zylinderachse verlaufen, **dadurch gekennzeichnet, dass** der Gang der Schraubenrampen (8) und ihr relativer Reibungskoeffizient derart sind, dass man nach Belieben durch Schwenken die Höhe des Keils variieren kann, und dass sie nach dem Positionieren jede relative Drehung der zwei Rampen in Berührung verhindern.

2. Stützkeil nach Anspruch 1, **dadurch gekennzeichnet, dass** er aus zwei Rampen (8) besteht, die sich jede über einen Sektor zu 180° erstrecken.

3. Stützkeil nach Anspruch 1 oder 2, **dadurch gekennzeichnet, dass** er eine zylindrische axiale Öffnung (16) umfasst.

4. Stützkeil nach einem der vorhergehenden Ansprüche, **dadurch gekennzeichnet, dass** seine Teile (2) aus einem Werkstoff hergestellt sind, der aus Betonsorten, Polymerbetonsorten, Gusseisen, starren Kunststoffwerkstoffen ausgewählt ist.

5. Stützkeil nach einem der vorhergehenden Ansprüche, **dadurch gekennzeichnet, dass** die Rampen radiale Rillen tragen, die nach dem Positionieren jede relative Drehung der zwei Rampen in Berührung verhindern.

## Claims

1. Support wedge of adjustable thickness, composed of two substantially frustocylindrical similar parts (2), in which wedge one of the bases (6) of the frustum of the cylinder carries at least two helical ramps (8) of uniform pitch, which are symmetrical with respect to the axis of the cylinder and extend over a proportioned angular sector of the base (6), these ramps (8) being connected to one another by means of planes (14) passing through the axis of the cylinder, **characterized in that** the pitch of the helical ramps (8) and their relative coefficient of friction are such that the height of the wedge can be varied, as desired, by pivoting, and such that, after positioning, they prevent any relative rotation of the two ramps in contact.

2. Support wedge according to Claim 1, **characterized in that** it is composed of 2 ramps (8), each extending over a sector of 180°.

3. Support wedge according to either one of Claims 1 and 2, **characterized in that** it comprises a cylindrical axial orifice (16).

4. Support wedge according to any one of the preceding claims, **characterized in that** its parts (2) are produced from a material selected from concretes, polymer concretes, cast iron and rigid plastics.

5. Support wedge according to any one of the preceding claims, **characterized in that** the ramps carry radial grooves which, after positioning, prevent any relative rotation of the two ramps in contact.
